# EUROPEAN PATENT SPECIFICATION

(11) **EP 2 080 966 B1**
(45) Date of publication and mention of the grant of the patent: **12.06.2019**
(21) Application number: 09000513.3
(22) Date of filing: 15.01.2009
(51) Int. Cl.: F25B 15/00, F25B 27/02

(54) **Chilled water generation system**
Kühlwassererzeugungssystem
Système de génération d'eau refroidie

(30) Priority: 17.01.2008 JP 2008007862
(43) Date of publication of application: 22.07.2009
(73) Proprietor: Johnson Controls Technology Company, Glendale WI 53209 (US)
(72) Inventor: Takeda, Nobuyuki, Tsuchiura-shi, Ibaraki (JP); Fujii, Tatsuo, Chiyoda-ku, Tokyo 100-8220 (JP); Nishiguchi, Akira, Chiyoda-ku, Tokyo 100-8220 (JP)
(74) Representative: Beetz & Partner mbB

(56) References cited:
- WO-A1-02/18851
- US-A- 5 205 137
- US-A- 5 572 884

## Description

### Background of the Invention

The present invention relates to a chilled water generation system and is suited, in particular, to a chilled water generation system which is used as a heat source machine.

As a conventional, single effect absorption refrigerating machine with hot water as a heat source, there is one comprising a generator, a condenser, a single stage evaporative absorber, a solution flow passage and a refrigerant flow passage, which connect these equipments, a solution pump and a refrigerant pump, which circulate a solution and a refrigerant in a cycle, a heat source hot water flow passage, through which a hot water being a heat source is caused to flow, a chilled water flow passage, through which a chilled water is caused to flow, and a cooling water flow passage, through which a cooling water is caused to flow. JP-A-2000-266422 is listed as Patent Document related to such refrigerating machine.

Further, a chilled water generation system comprising a single effect absorption refrigerating machine that generates a chilled water with a hot water as a heat source, and an absorption refrigerating machine provided with a single stage evaporative absorber is known from US 5 572 884 A.

With such conventional, single effect absorption refrigerating machine, when a chilled water being low in chilled water temperature, for example, at about 7°C is to be taken out, a heat source temperature as high as around 80°C is practically needed whereby there is caused a problem that it is not possible to make use of a heat source being lower in temperature.

Hereupon, there has been examined an absorption refrigerating machine, which can be utilized up to about a heat source temperature of about 60°C with the use of two stage absorption cycle. As a non-Patent Document, there is listed "Leading Research and Development of Foundation of Technology for Effective Use of Energy/Research and Development of Hybrid Air-Conditioning System Utilizing Low-temperature Exhaust Heat" Progress Report of 2001 published by New Energy and Industrial Technology Development Organization.

In the absorption refrigerating machine, which uses the two stage absorption cycle, an improvement in coefficient of performance (COP) is desired for the absorption refrigerating machine in case of being made use of at a low heat source temperature.

### Brief Summary of the Invention

It is an object of the invention to provide a chilled water generation system which can be improved in coefficient of performance even at a low heat source temperature.

In order to attain the object the invention provides a chilled water generation system according to claim 1. A first embodiment of the invention provides a chilled water
generation system comprising a single effect absorption refrigerating machine that generates a chilled water with a hot water as a heat source, and an absorption refrigerating machine provided with a multiple stage evaporative absorber, and wherein the hot water and the chilled water are caused to first flow to the single effect absorption refrigerating machine and to then flow to the absorption refrigerating machine provided with the multiple stage evaporative absorber.

Further preferred, specific constructions in the first embodiment of the invention are as follows.
(1) The single effect absorption refrigerating machines are plural in number.
(2) In the construction (1), the single effect absorption refrigerating machines are two in number and the absorption refrigerating machine provided with the multiple stage evaporative absorber is one in number.
(3) The single effect absorption refrigerating machines are greater in number than the absorption refrigerating machine provided with the multiple stage evaporative absorber.
(4) A cooling water that cools the single effect absorption refrigerating machine and the multiple stage evaporative absorber is caused to first flow to the single stage evaporative absorber and to then flow to the absorption refrigerating machine provided with the multiple stage evaporative absorber.

With the chilled water generation system according to the invention, it is possible to achieve an improvement in coefficient of performance even at a low heat source temperature.

### Brief Description of the Drawings

Fig. 1 is a schematic flow diagram showing a chilled water generation system according to a first embodiment of the invention;
Fig. 2 is a schematic flow diagram showing a modification of the chilled water generation system shown in Fig. 1;
Fig. 3 is a schematic flow diagram showing a chilled water generation system according to a second embodiment of the invention;
Fig. 4 is a schematic flow diagram showing a modification of the chilled water generation system shown in Fig. 3.

### Description of the Preferred Embodiments

A plurality of embodiments of the invention will be described below with reference to the drawings. The same reference numerals in the drawings of the respective embodiments denote the same or corresponding elements.

### (First embodiment)

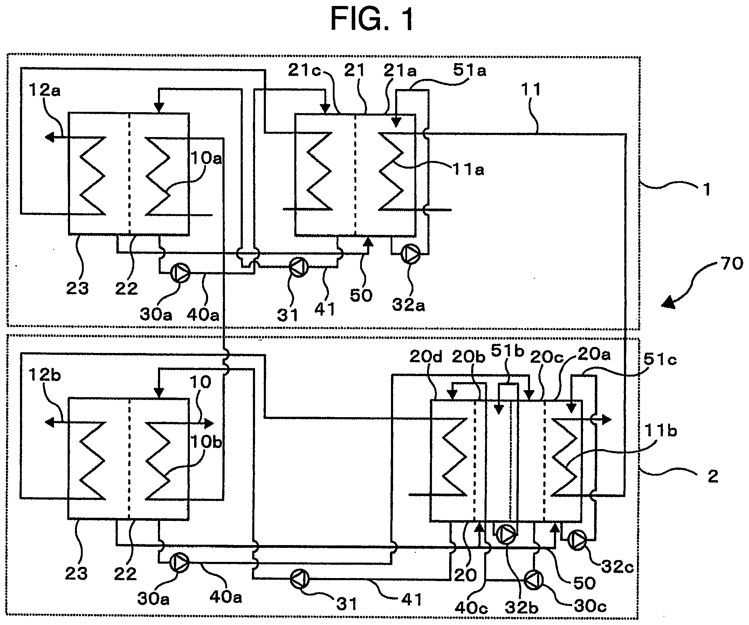

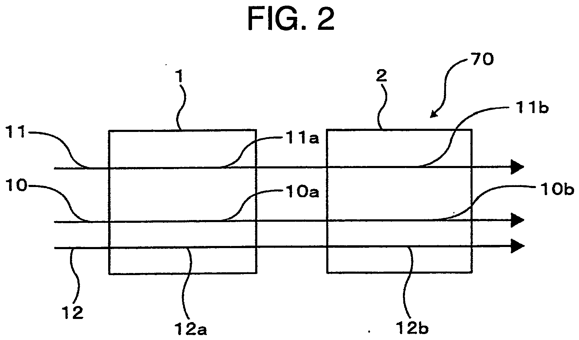

A chilled water generation system according to a first embodiment of the invention and a modification thereof will be described with reference to Figs. 1 and 2. Fig. 1 is a schematic flow diagram showing a chilled water generation system 70 according to the first embodiment of the invention and Fig. 2 is a schematic flow diagram showing a modification of the chilled water generation system 70 shown in Fig. 1.

The chilled water generation system 70 according to the embodiment comprises a combination of a plurality of absorption refrigerating machines 1, 2. The plurality of absorption refrigerating machines 1, 2 according to the embodiment comprise a single effect absorption refrigerating machine 1 provided with a single stage evaporative absorber 21, and a single effect absorption refrigerating machine 2 provided with a multiple stage evaporative absorber 20, and are driven with hot water, which makes use of exhaust heat, as a heat source. In this manner, according to the embodiment, exhaust heat can be made effective use of to generate a chilled water, so that it is possible to achieve reduction in initial cost and running cost as compared with a single effect absorption refrigerating machine provided with a single stage evaporative absorber and replenishing a shortage of a chilled water with a multiple effect absorption refrigerating machine.

The single effect absorption refrigerating machine 1 comprises the single stage evaporative absorber 21, a generator 22, a condenser 23, a strong solution pump 30a, a dilute solution pump 31, a refrigerant pump 32a, a strong solution flow passage 40a, a dilute solution flow passage 41, a refrigerant flow passage 50, a heat source hot water flow passage 10a, a chilled water flow passage 11a, and a cooling water flow passage 12a.

Also, the absorption refrigerating machine 2 provided with the multiple stage evaporative absorber comprises the multiple stage evaporative absorber 20, a generator 22, a condenser 23, strong solution pumps 30a, 30c, a dilute solution pump 31, refrigerant pumps 32b, 32c, strong solution flow passages 40a, 40c, a dilute solution flow passage 41, refrigerant flow passages 50, 51b, 51c, a heat source hot water flow passage 10b, a chilled water flow passage 11b, and a cooling water flow passage 12b.

The heat source hot water flow passages 10a, 10b are connected in series in this order to form a single heat source hot water flow passage 11. Also, the chilled water flow passages 11a, 11b are connected in series in this order to form a single chilled water flow passage 11. The cooling water flow passages 12a, 12b are formed to be independent or in parallel.

A chilled water (for example, a chilled water at about 15°C) raised in temperature and returned from a cooling load system is first caused to heat exchange with a refrigerant, which is sprayed in an evaporator 21a of the evaporative absorber 21, in the chilled water flow passage 11a of the single effect absorption refrigerating machine 1 to be cooled to an intermediate temperature (for example, around a temperature of 11°C) by heat of vaporization of the refrigerant. A chilled water leaving the chilled water flow passage 11a is then caused to heat exchange with a refrigerant, which is sprayed in the multiple stage evaporative absorber, in the chilled water flow passage 11b of the absorption refrigerating machine 2 provided with the multiple stage evaporative absorber to be cooled to a predetermined chilled water temperature (for example, around a temperature of 7°C) by heat of vaporization of the refrigerant to be returned to the cooling load system.

On the other hand, a heat source hot water heated by exhaust heat, etc. for example, a heat source hot water at about 90°C to 80°C first heats a dilute solution, which is received in the generator 22, in the heat source hot water flow passage 10a of the single effect absorption refrigerating machine 1 to generate a refrigerant vapor to be decreased to a temperature of, for example, around 80°C to 60°C. A heat source hot water leaving the heat source hot water flow passage 10a then heats a dilute solution, which is received in the generator 22, in the heat source hot water flow passage 10b of the absorption refrigerating machine 2 provided with the multiple stage evaporative absorber to generate a refrigerant vapor to be made around, for example, 55°C to be discharged outside.

According to the embodiment, it is possible to make a chilled water temperature at an outlet of the single effect absorption refrigerating machine 1 higher than a predetermined chilled water temperature, so that it is possible to make solution enrichment and refrigerant regeneration low in temperature in the absorption refrigerating machine 1. Further, a heat source hot water 10 is caused to flow first to the single effect absorption refrigerating machine 1 whereby it is possible to increase a difference in temperature between solution enrichment and refrigerant regeneration in the absorption refrigerating machine 1 and a heat source hot water. Accordingly, it is possible to preferentially take heat of a heat source into the single effect absorption refrigerating machine 1 to efficiently cool a chilled water. Further, use of the absorption refrigerating machine 2 provided with the multiple stage evaporative absorber makes it possible to achieve cooling to a predetermined chilled water temperature making use of a low-temperature heat source hot water, which cannot be made use of in the single effect absorption refrigerating machine 1. Thereby, it is possible to convert a further large quantity of exhaust heat into effective heat energy of a chilled water.

While the single effect absorption refrigerating machine 1 is generally good in coefficient of performance as compared with the absorption refrigerating machine 2 provided with the multiple stage evaporative absorber of two stage absorption cycle or the like, a high temperature is needed as a heat source. Also, as characteristics in absorption refrigerating machine cycle, the higher a chilled water temperature and the lower a cooling water temperature, the lower a temperature required to concentrate a solution in the generator 22 to regenerate a refrigerant. Therefore, since a difference between a heat source temperature and a refrigerant regeneration temperature can be made large in the single effect absorption refrigerating machine 1, it is possible to take in a further large quantity of heat as a drive heat source for the absorption refrigerating machine. By preferentially making use of heat of a heat source on a side of the single effect absorption refrigerating machine 1 being excellent in coefficient of performance and subsequently making use of a low-temperature exhaust heat, which cannot be made use of in the single effect absorption refrigerating machine 1, on a side of the absorption refrigerating machine 2 provided with the multiple stage evaporative absorber, it is possible to efficiently enlarge that range, in which heat such as exhaust heat, etc. is made use of, thus enabling generating a useful chilled water.

In addition, in the case where a sufficient quantity of cooling water cannot be ensured, a cooling water flow passage 12 is effective, in which a cooling water being low in temperature is caused to first flow to the cooling water flow passage 12a of the single effect absorption refrigerating machine 1 and to then flow to the cooling water flow passage 12b of the absorption refrigerating machine 2 provided with the multiple stage evaporative absorber as shown in Fig. 2.

### (Second embodiment)

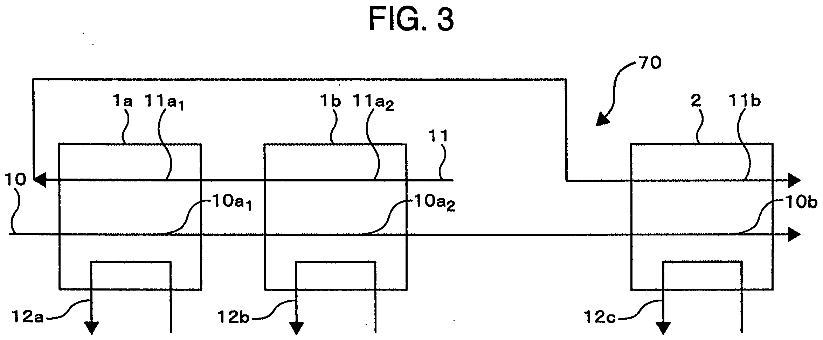

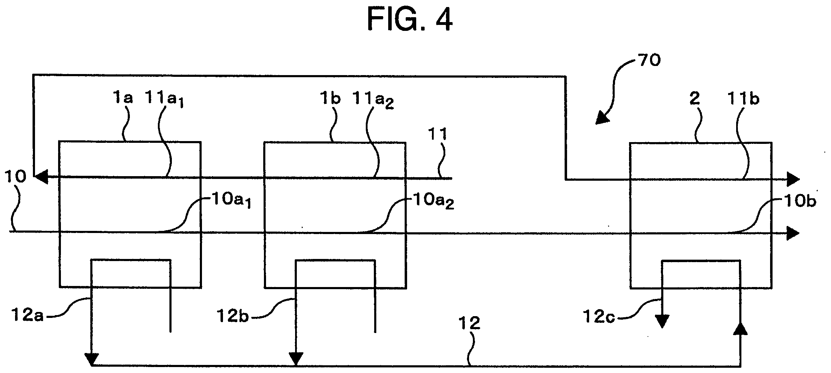

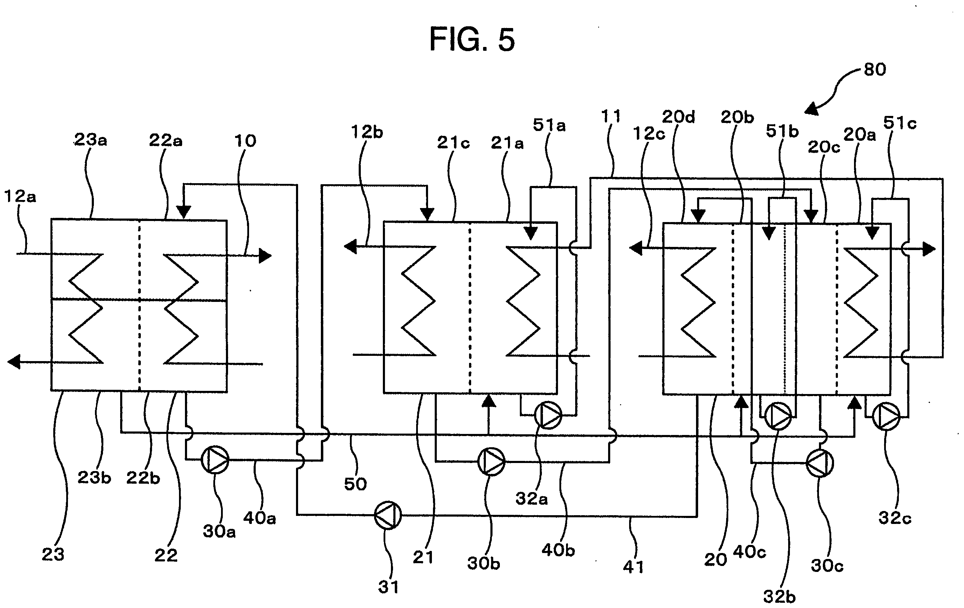

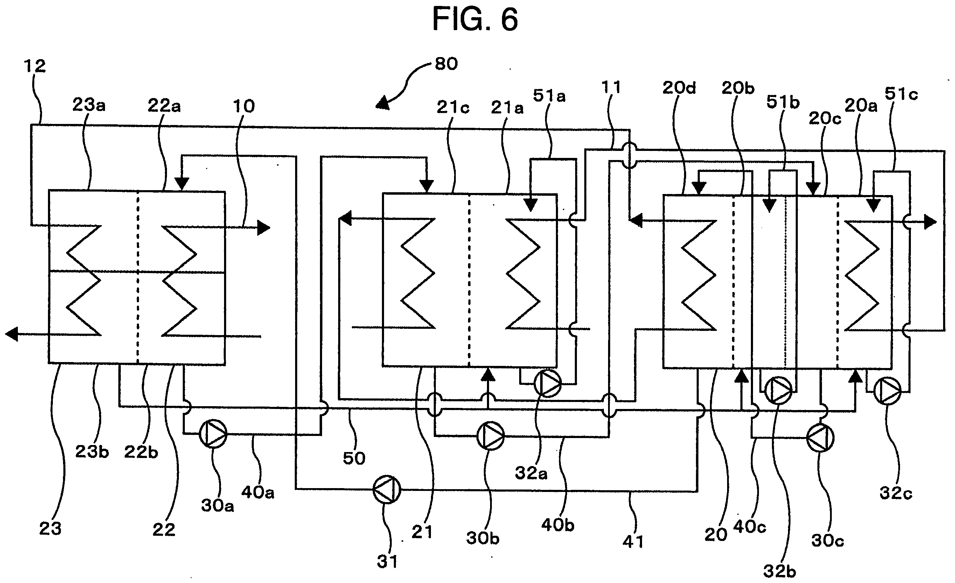

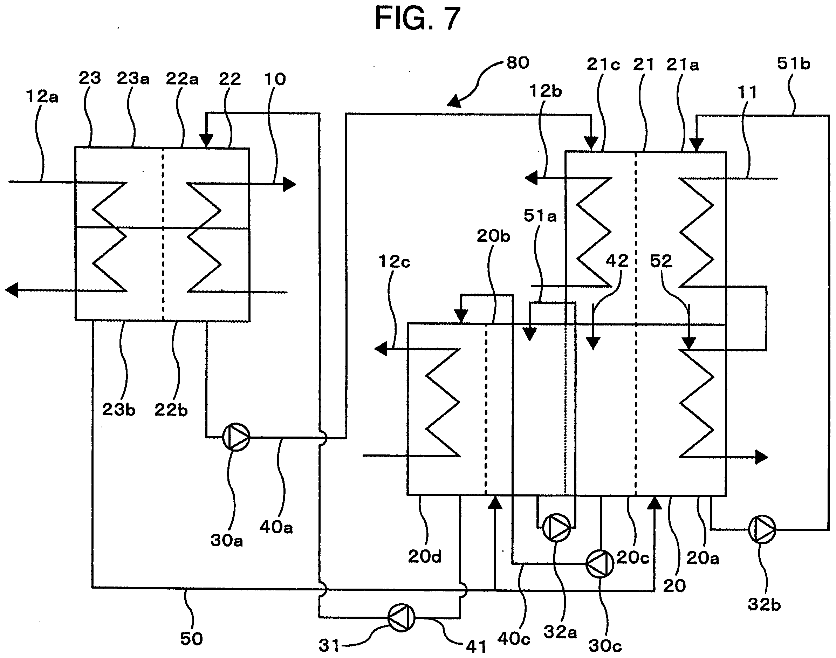

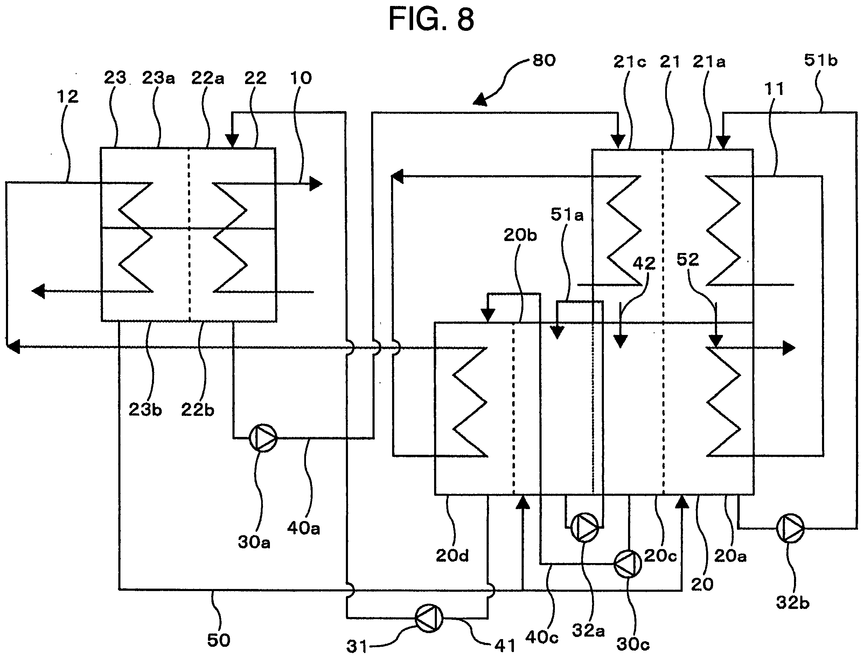

Subsequently, a chilled water generation system according to a second embodiment of the invention and a modification thereof will be described with reference to Figs. 3 and 4. Fig. 3 is a schematic flow diagram showing a chilled water generation system 70 according to the second embodiment of the invention and Fig. 4 is a schematic flow diagram showing a modification of the chilled water generation system 70 shown in Fig. 3. Since the second embodiment is different in the following from the first embodiment and fundamentally the same in the remainder as that of the first embodiment, a duplicate explanation therefor is omitted.

According to the second embodiment, the chilled water generation system 70 comprises two single effect absorption refrigerating machines 1a, 1b and an absorption refrigerating machine 2 provided with a multiple stage evaporative absorber. A heat source hot water and a chilled water are caused to flow first to the two single effect absorption refrigerating machines 1a, 1b and to then flow to the absorption refrigerating machine 2 provided with the multiple stage evaporative absorber.

Specifically, in order to generate countercurrent flows in heat source hot water flow passages 10a₁, 10a₂ and chilled water flow passages 11a₁, 11a₂ of the respective single effect absorption refrigerating machines 1a, 1b, a heat source hot water is caused to flow in the heat source hot water flow passage 10a₁ of the single effect absorption refrigerating machine 1a and to then flow in the heat source hot water flow passage 10a₂ of the single effect absorption refrigerating machine 1b, and a chilled water is caused to flow in the chilled water flow passage 11a₂ of the single effect absorption refrigerating machine 1b and to then flow in the chilled water flow passage 11a₁ of the single effect absorption refrigerating machine 1a.

The second embodiment produces a larger effect than that of the first embodiment.

In addition, in the case where a sufficient quantity of cooling water cannot be ensured, a cooling water flow passage 12 is effective, in which a cooling water being low in temperature is caused to first flow to cooling water flow passages 12a, 12b of single effect absorption refrigerating machines 1a, 1b and to then flow to a cooling water flow passage 12c of an absorption refrigerating machine 2 provided with a multiple stage evaporative absorber as shown in Fig. 4.

## Claims

1. A chilled water generation system (70) comprising a single effect absorption refrigerating machine (1, 1a, 1b) that generates a chilled water with a hot water as a heat source, an absorption refrigerating machine (2) provided with a multiple stage evaporative absorber (20), and a heat source hot water flow passage (10) for the hot water, a chilled water flow passage (11) for the chilled water and a cooling water flow passage (12) for a cooling water,
the heat source hot water flow passage (10) and the chilled water flow passage (11) being configured such that the hot water and the water to be cooled in the chilled water generation system (70) are caused to first flow to the single effect absorption refrigerating machine (1, 1a, 1b) and to then flow to the absorption refrigerating machine (2) provided with the multiple stage evaporative absorber (20), and
the cooling water flow passage (12) being configured such that the a cooling water that cools the single effect absorption refrigerating machine (1, 1a, 1b) and the multiple stage evaporative absorber (20) is caused to first flow to the single stage evaporative absorber (1, 1a, 1b) and to then flow to the absorption refrigerating machine (2) provided with the multiple stage evaporative absorber (20).

2. The chilled water generation system (70) according to claim 1, wherein the single effect absorption refrigerating machines (1, 1a, 1b) are plural in number.

3. The chilled water generation system (70) according to claim 2, wherein the single effect absorption refrigerating machines (1, 1a, 1b) are two in number and the absorption refrigerating machine (2) provided with the multiple stage evaporative absorber (20) is one in number.

4. The chilled water generation system (70) according to claim 1, wherein the single effect absorption refrigerating machines (1, 1a, 1b) are greater in number than the absorption refrigerating machine (2) provided with the multiple stage evaporative absorber (20).

## Patentansprüche

1. System (70) zur Erzeugung von gekühltem Wasser, umfassend eine Absorptionskältemaschine (1, 1a, 1b) mit einfacher Wirkung, die ein gekühltes Wasser mit einem Heißwasser als eine Wärmequelle erzeugt, eine Absorptionskältemaschine (2), die mit einem Mehrstufen-Verdampfungsabsorber (20) versehen ist, und einen Wärmequellenheißwasser-Strömungsdurchgang (10) für das Heißwasser, einen Strömungsdurchgang (11) für gekühltes Wasser für das gekühlte Wasser und einen Kühlwasser-Strömungsdurchgang (12) für ein Kühlwasser, wobei
der Wärmequellenheißwasser-Strömungsdurchgang (10) und der Strömungsdurchgang (11) für gekühltes Wasser derart ausgelegt sind, dass bewirkt wird, dass das Heißwasser und das Wasser, das in dem System (70) zur Erzeugung von gekühltem Wasser gekühlt werden soll, zuerst zu der Absorptionskältemaschine (1, 1a, 1b) mit einfacher Wirkung und dann zu der Absorptionskältemaschine (2), die mit einem Mehrstufen-Verdampfungsabsorber (20) versehen ist, fließen, und
der Kühlwasser-Strömungsdurchgang (12) derart ausgelegt ist, dass bewirkt wird, dass das eine Kühlwasser, das die Absorptionskältemaschine (1, 1a, 1b) mit einfacher Wirkung und den Mehrstufen-Verdampfungsabsorber (20) kühlt, zuerst zu dem Einstufen-Verdampfungsabsorber (1, 1a, 1b) und dann zu der Absorptionskältemaschine (2), die mit dem Mehrstufen-Verdampfungsabsorber (20) versehen ist, fließt.

2. System (70) zur Erzeugung von gekühltem Wasser nach Anspruch 1, wobei die Absorptionskältemaschinen (1, 1a, 1b) mit einfacher Wirkung in der Mehrzahl vorliegen.

3. System (70) zur Erzeugung von gekühltem Wasser nach Anspruch 2, wobei die Absorptionskältemaschinen (1, 1a, 1b) mit einfacher Wirkung zwei an der Zahl sind und die Absorptionskältemaschine (2), die mit dem Mehrstufen-Verdampfungsabsorber (20) versehen ist, eine an der Zahl ist.

4. System (70) zur Erzeugung von gekühltem Wasser nach Anspruch 1, wobei die Absorptionskältemaschinen (1, 1a, 1b) mit einfacher Wirkung in größerer Anzahl vorliegen als die Absorptionskältemaschine (2), die mit dem Mehrstufen-Verdampfungsabsorber (20) versehen ist.

## Revendications

1. Système de génération d'eau fraîche (70) comprenant une machine de réfrigération par absorption à effet unique (1, 1a, 1b) qui génère une eau fraîche avec une eau chaude en tant que source de chaleur, une machine de réfrigération par absorption (2) dotée d'un absorbeur évaporateur à étages multiples (20) et un passage d'écoulement d'eau chaud de source de chaleur (10) pour l'eau chaude, un passage d'écoulement d'eau fraîche (11) pour l'eau fraîche et un passage d'écoulement d'eau de refroidissement (12) pour une eau de refroidissement,
le passage d'écoulement d'eau chaud de source de chaleur (10) et le passage d'écoulement d'eau fraîche (11) étant configurés de telle façon que l'eau chaude et l'eau à refroidir dans le système de génération d'eau fraîche (70) s'écoulent d'abord vers la machine de réfrigération par absorption à effet unique (1, 1a, 1b) puis s'écoulent vers la machine de réfrigération par absorption (2) dotée de l'absorbeur évaporateur à étages multiples (20), et
le passage d'écoulement d'eau de refroidissement (12) étant configuré de telle façon que l'eau de refroidissement qui refroidit la machine de réfrigération par absorption à effet unique (1, 1a, 1b) et l'absorbeur évaporateur à étages multiples (20) s'écoule d'abord vers la machine de réfrigération par absorption à effet unique (1, 1a, 1b) puis s'écoule vers la machine de réfrigération par absorption (2) dotée de l'absorbeur évaporateur à étages multiples (20).

2. Système de génération d'eau fraîche (70) selon la revendication 1, dans lequel les machines de réfrigération par absorption à effet unique (1, 1a, 1b) sont en plusieurs nombres.

3. Système de génération d'eau fraîche (70) selon la revendication 2, dans lequel les machines de réfrigération par absorption à effet unique (1, 1a, 1b) sont deux en nombre et la machine de réfrigération par absorption (2) dotée de l'absorbeur évaporateur à étages multiples (20) est une en nombre.

4. Système de génération d'eau fraîche (70) selon la revendication 1, dans lequel les machines de réfrigération par absorption à effet unique (1, 1a, 1b) sont en plus grand nombre que la machine de réfrigération par absorption (2) dotée de l'absorbeur évaporateur à étages multiples (20) est une en nombre.
